# EUROPEAN PATENT SPECIFICATION

(11) **EP 2 512 901 B1**
(45) Date of publication and mention of the grant of the patent: **23.07.2014**
(21) Application number: 09837232.9
(22) Date of filing: 17.12.2009
(51) Int. Cl.: B62D 7/15, B62D 5/04

(54) **STEERING MOTORS POWER SUPPLY METHOD AND POWER SUPPLY SYSTEM ADAPTED TO SUCH A METHOD**
STROMVERSORGUNGSVERFAHREN FÜR LENKMOTOREN UND AN EIN DERARTIGES VERFAHREN ADAPTIERTES STROMVERSORGUNGSSYSTEM
PROCÉDÉ D'ALIMENTATION ÉLECTRIQUE DE MOTEURS DE DIRECTION ET SYSTÈME D'ALIMENTATION ÉLECTRIQUE ADAPTÉ AUDIT PROCÉDÉ

(43) Date of publication of application: 24.10.2012
(73) Proprietor: Renault Trucks, 69800 Saint Priest (FR)
(72) Inventor: DORAY, Jean-Baptiste, F-38670 Chasse sur Rhone (FR); LE BRUSQ, Philippe, F-69003 lyon (FR); MILLET, Michael, F-38440 Moidieu Detourbe (FR)
(74) Representative: Putet, Gilles
(86) International application number: PCT/IB2009/008094
(87) International publication number: WO 2011/073720

(56) References cited:
- EP-A1- 1 900 602
- WO-A1-2009/028735
- JP-A- 2007 001 324
- US-A1- 2002 068 655

## Description

### TECHNICAL FIELD OF THE INVENTION

The present invention relates to a method for controlling power supply of two electrically driven steering motors on-board an automotive vehicle. The invention also concerns a power supply system adapted to perform such a method.

### BACKGROUND

Some vehicles are equipped with two power networks of different voltages: a high power network and a low power network each equipped with their own power storage system such as a battery. Different electrical systems are connected to one or the other of said networks, for example depending on their power requirements.

This is most frequent on electrically driven vehicles or hybrid electric vehicles where it is known to have a high voltage traction power network, which feeds a traction motor, and a low voltage network, which feeds conventional vehicle equipment systems such as the lights, the electronic control system of the vehicle, power window motors, windshield wiper motors, etc.

From document JP-A-2007-1324, it is known that a steering assistance system comprising an electric motor may be connected to the high voltage power network of the vehicle, in such case the traction power network. From that document, it is also known to provide a step-up circuit connected to the low voltage source, said step-up circuit being adapted to deliver a back-up electrical power in case of failure of the traction high voltage source. Furthermore document EP 1900602 A1 discloses the preamble of claim 1.

Some vehicles have two steering axles. In order to operate those steering axles, each of them may be provided with its own electric steering system. Each electric system can be a full electric system, where the electric system operates the steering system on its own as known steer-by-wire systems, or a more conventional steering assistance system where the electric system operates in parallel to a mechanical system to alleviate the effort which the driver needs to put in the mechanical system to operate the steering system. It can be provided that each electric steering system is provided with an electric steering motor, and it can be provided that each motor is fed by the high voltage network. The electric steering system, whether a full electric system or a steering assistance system, can operate directly on the steering mechanism, for example with a steering motor engaging the mechanism directly through a rack and pinion mechanism, or indirectly, with a steering motor driving a hydraulic pump which feeds a hydraulic steering actuator.

In case of failure of the high voltage network, it can be imagined that a back-up system such as the one described in JP-A-2007-1324 can be used to deliver back-up power to the two steering motors. But in such a case, available power will be reduced, and each motor will not be able to operate in the same way as in normal use, and that is even more true when two steering motors need to be fed. Therefore, an optimized control of the operating conditions of the two motors is needed, in order for the steering system to remain operational despite a reduced available electric power.

### SUMMARY

This invention aims at proposing a method for controlling power supply of two electrically driven steering motors on-board an automotive land vehicle, which manages priority between the two motors and allows them to operate properly with a reduced electrical power.

To this end, the invention concerns a method for controlling the power supply of an electrically powered steering system on-board an automotive land vehicle equipped with a high voltage source and a low voltage source, wherein a first steering motor operates at a nominal operating voltage which is higher than the voltage of the low voltage source, is fed by the high voltage source and may absorb a first nominal operating power, and wherein a step-up circuit is connected to said low voltage source, and is adapted to deliver a back-up electrical power in case of failure of said high voltage source, characterized in that the steering system comprises a second steering motor which operates at a nominal operating voltage which is higher than the voltage of the low voltage source, which is fed by the high voltage source and may absorb a second nominal operating power, and in that, in case of failure of the high voltage source, back-up electrical power absorbed by each of the two motors is limited on the basis of a priority rule.

Thanks to the invention, each motor absorbs a limited power depending on the priority rule. This allows reducing the global power absorbed by the two motors in case of failure of the traction network and, as a consequence, to downsize the back-up network.

According to further aspects of the Invention, which are advantageous but not compulsory, such a method may incorporate one or several of the following features:
- in case of failure of the high voltage source, the first steering motor is controlled to absorb no more than a first percentage of its nominal operating power, the second steering motor is controlled to absorb no more than a second percentage of its nominal operating power, and the first percentage is higher than second percentage;
- in case of failure of the high voltage source, the motors are controlled so that a first fraction of the back-up power is absorbed by the first steering motor, so that a second fraction of the back-up power is absorbed by a second motor, and so that the first fraction is larger than the second fraction;
- the priority rules varies according to at least one vehicle parameter.
- the rotation speed of each of the motors is controlled, In case of failure of the traction high voltage source, so as to be able to generate a torque capacity with a value equal to the torque value which it is capable of delivering in a normal configuration of said high voltage source;
- the high voltage source is connected to a high voltage power network of the vehicle to which is connected a traction motor capable of delivering driving torque to a driveline of the vehicle; and
- the low voltage source is connected to a low voltage power network of the vehicle to which are connected low power consumers of the vehicle.

The invention also concerns a power supply system for an electrically powered steering system on-board an automotive land vehicle, equipped with a high voltage source and a low voltage source, wherein a first steering motor operates at a nominal operating voltage which is higher than the voltage of the low voltage source, is fed by the high voltage source and may absorb a first nominal operating power, and wherein a step-up circuit is connected to said low voltage source and is adapted to deliver a back-up electrical power in case of failure of said traction high voltage source, characterized in that the steering system comprises a second steering motor which operates at a nominal operating voltage which is higher than the voltage of the low voltage source, which is fed by the high voltage source and may absorb a second nominal operating power, and in that the power supply system comprises means to control the rotation speed of each of the motors so as to, in case of failure of the traction high voltage source, limit the electrical power absorbed by each motor on the basis of a priority rule included in a dataset.

According to further aspects of the invention which are advantageous but not compulsory, such a power supply system may incorporate one or several of the following features:
- the means to control the rotation speed of each motor comprise two inverters, each connected to one motor, and a power management unit connected to the two inverters;
- a first motor delivers torque to a front axle steering assistance system of the vehicle and a second motor delivers torque to a rear axle steering assistance system of the vehicle;
- the control means include a memory where the dataset is stored and the control means have access to said memory; and
- the dataset (D) may be fixed or adjustable.

### BRIEF DESCRIPTION OF THE DRAWINGS

The invention will now be explained in correspondence with the annexed figures and as an illustrative example, without restricting the object of the invention. In the annexed figures:

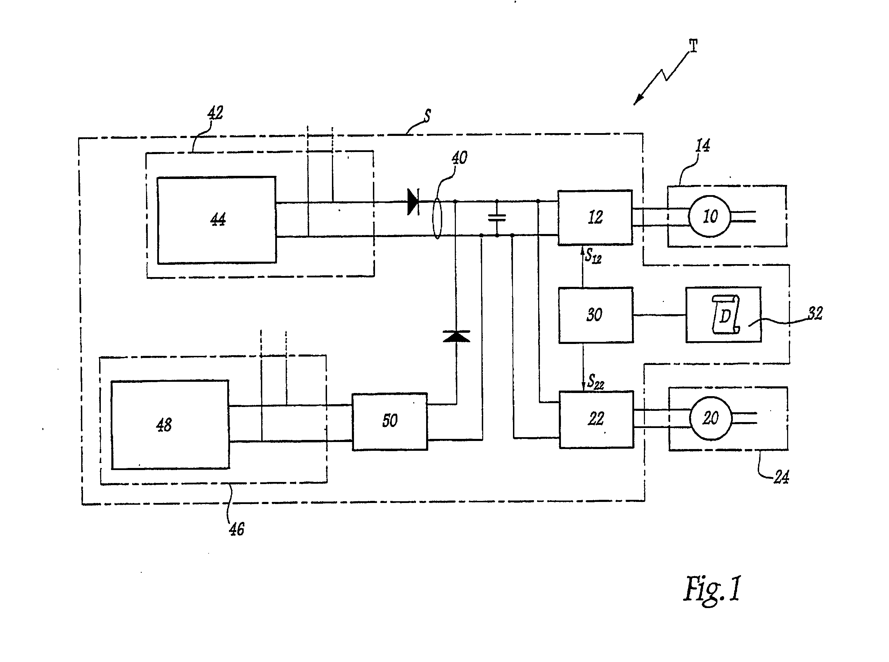

- Figure 1 is a diagram of a power supply system according to the invention;
- Figure 2 is a torque versus rotation-speed chart representing the operation conditions of two motors with which a method according to the invention can be performed.

### DETAILED DESCRIPTION

The invention will be hereinafter be described in the context of a hybrid electric automotive vehicle, such as a truck T, which is provided with two steering axles, each being equipped with a steering assistance system driven by an electrically fed steering motor. A front axle steering assistance system 14 is equipped with a front steering motor 10 and a rear axle steering assistance system 24 is equipped with a rear steering motor 20. Each of the front motor 10 and rear motor 20 is for example an alternating current motor and is therefore respectively connected to a power supply system S via a three phase inverter, respectively 12 and 22. inverters 12 and 22 are adapted to control the respective rotation speeds ω₁₀ and ω₂₀ of steering motors 10 and 20. The front and rear motors may have the same nominal power rating or may have a different nominal operating power ratings. The nominal operating power rating can be considered as the maximal electrical power which the motor may absorb under normal operating conditions.

The power supply system S is provided with an electronic power management unit 30 which is adapted to communicate with the two inverters, in particular to provide them with electronic control signals S₁₂ and S₂₂. A memory 32 is integrated in the power supply system. This memory is adapted to contain a data set D. Memory 32 can be implemented as a separate component. Alternatively, it may be integrated into the power management unit 30.

Each of inverter 12 and inverter 22 is connected, via a high voltage line 40, with a high voltage power network 42, to which a high voltage battery set 44 is connected. In this example, the high voltage network is a traction network to which a traction motor of the vehicle is connected. The nominal voltage of the traction network can be comprised between 250 and 1000 volts. Nevertheless, the high voltage network could have a lower nominal voltage, for example comprised between 30 and 100 volts.

A back-up electrical power network 46 is also connected to the two inverters. This network 46 is connected to a low voltage source, which can be a low voltage battery set 48 pertaining to a low voltage network. A step-up circuit 50 is connected to low voltage battery set 48 and to the high voltage line 40. The step-up circuit 50 is used to raise the voltage of the electrical power delivered by low voltage battery set 48 to high voltage line 40, when necessary. The low voltage network can feed low power systems such as the lights, the electronic control system of the vehicle, power window motors, windshield wiper motors, etc.... It's nominal voltage can for example be in the order of 12 to 24 volts.

The step-up circuit 50 may be provided with one or several transformers. Alternatively, the step-up circuit could be a dc-dc boost converter. Its output voltage can be set at various levels.

The high voltage line 40 comprises a diode, which allows passage of electrical current from high voltage battery set 44 to inverters 12, 22. Step-up circuit 50 is connected to high voltage line 40 by a back-up line joining the high voltage line 40 between diode and the inverter 12, 22. Back-up line includes a diode which allows passage of electrical current from step-up circuit 50 to high voltage line 40.

A capacitor may be connected in parallel to inverters 12, 22, between the two cables of line 40 which, in the example shown, are connected to the anode and to the cathode of the high voltage battery set 12. The two cables of back-up line are respectively connected to the anode and to the cathode of the low voltage battery 48.

The diodes are respectively located on cables of the high voltage line and of the back-up lines so as to allow current to flow only in the direction from the anode of the respective battery towards the inverters. The anode cables of both lines are connected downstream of both diodes.

In normal use, steering motors 10, 20 are electrically fed by high voltage power network 10. A failure of traction power network 42 may occur. Such a failure can be provoked by a failure of a fuse, a flaw of a relay of battery set 44 or another problem. Failure of the traction power network can be total, whereas the available voltage and power are reduced to zero, or only partial, whereas the available voltage and/or power may be reduced compared to their nominal rating. Partial failure of the battery can be the consequence of the temperature of the battery falling below an optimal range of temperature. In both cases, the voltage and/or the power available from the traction power network 42 decreases to such an extent that steering motors 10, 20 may not be electrically properly fed anymore and this could lead to a loss of control of the vehicle by the driver.

Therefore, in case of failure of the high voltage network 42, back-up power network 46 automatically delivers electrical power to inverters 12 and 22, in order for steering motors 10 and 20 to operate properly.

As back-up power network 46 is not able to deliver enough electrical power to operate the two steering motors in the same conditions as in normal configuration, when the high voltage network is working properly, a priority rule is considered to operate the two motors. In fact, the power absorbed by the two motors is limited on the basis of this priority rule: priority is given to one steering system, for example to the front steering assistance system 14, in order to allow the driver of the vehicle to keep a good control of his path.

One example of such priority rule is to provide that, in case of failure of the high voltage source, the front motor may be controlled to absorb no more than a first percentage of its nominal operating power, the second motor may be controlled to absorb no more than a second percentage of its nominal operating power, and to provide that the first percentage is higher than second percentage. For example, while both motors may operate at 100% of their nominal operating power when the high voltage network is operative, it can be provided that, in case of failure of the high voltage source, the front motor may operate at no more than 40% of its nominal rating, while the rear motor may not operate at more than 25% of its nominal power.

Another way to define a priority rule is to control the motors so that, in case of failure of the high voltage source, a first fraction of the back-up power is absorbed by the first motor, so that a second fraction of the back-up power is absorbed by the second motor, and so that the first fraction is larger than the second fraction. As an example, it can be defined that X% of the back-up electric power Pₜₒₜ available for the steering system may be allocated to one steering motor and (100-X)% to the other steering motor 20, where X is between 51 and 100. Priority is given to the operation of the first steering system when X is strictly larger than 50. It can for example be decided to devote 60% of the back-up electric power Pₜₒₜ available for the steering system to the front motor and only 40% to the rear motor. Such priority rule will be adapted to cases where both motors have a similar nominal operating power rating.

In a refined embodiment of the invention, the priority rule varies according to at least one vehicle parameter such as the vehicle speed, the vehicle load, the vehicle axle load sharing ratio, the vehicle operating location as determined by a positioning system, the value of available back-up electrical power, etc.... For example, it may be provided that the front motor receives 60% of the available back-up power for the steering system when the vehicle is running above a certain speed threshold, and 80% when the vehicle is running below said speed threshold. The variation may by steps, or may be progressive, for example linear with a predetermined parameter, or may be a more complex function of several vehicle operating parameters.

The elements which define the priority rule are stored in dataset D, which can therefore be fixed or adjustable depending on whether a variation of the priority rule is provided.

In order for each of motors 10 and 20 to be able to deliver, in case of failure of high voltage network 42, a torque capacity equal, or at least as close as possible, to the torque capacity that they deliver in normal use, their respective rotation speeds ω₁₀ and ω₂₀ may be controlled. As torque capacity is proportional to power and inversely proportional to the rotation speed of a motor, if available power is reduced, rotation speed has to be reduced in order for the torque capacity to remain constant.

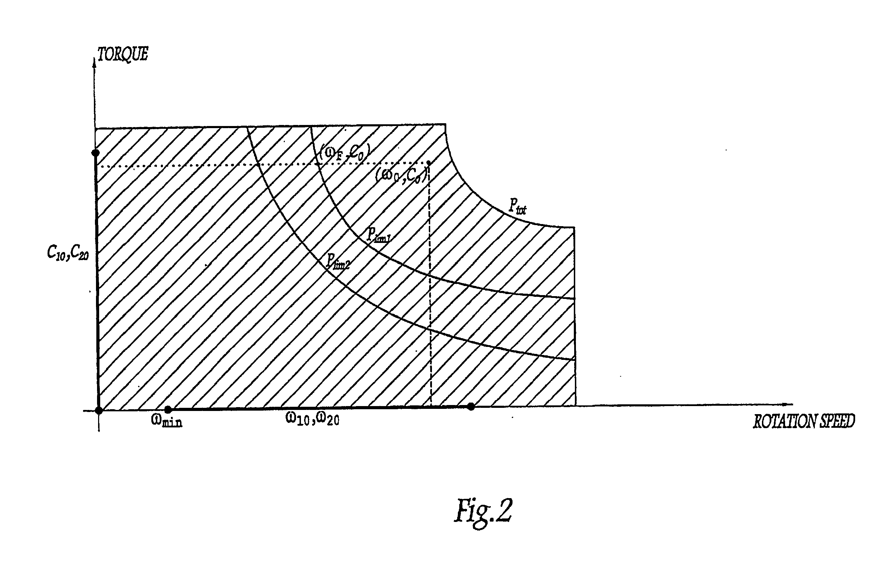

As shown on figure 2, operation conditions of each of motors 10 and 20 are controlled so as to respect absorbed power limitations curves Pₗᵢₘ₁ and Pₗᵢₘ₂, derived from dataset D included in memory 32.

in case of high voltage network 42 failure, and in order for torque capacity C₁₀ of steering motor 10 to match the torque capacity in normal use, the rotation speed ω₁₀ of the steering motor 10 is reduced, following a constant power curve Pₗᵢₘ₁. To this end, electronic power management unit 30 computes the right rotation speed ω₁₀ for steering motor 10 and controls the inverter 12 via electronic signal S₁₂. The constant power value used to determine the rotation speed reduction is given by the priority rule included in dataset D. In normal use, operation conditions point of motor 10 is referenced as couple (ω₀, C₀) on figure 2. In case of failure of high voltage network 42, operation conditions point is moved to match curve Pₗᵢₘ₁ at another point (ω₀, C₀). Torque C₁₀ can be maintained at a constant value C₀ while rotation speed ω₁₀ is reduced from ω₀ to ω_{F}.

This rotation speed reduction is also done for motor 20 delivering a torque C₂₀. Rotation speed ω₂₀ of rear steering motor 20 is reduced on the basis of a constant power curve Pₗᵢₘ₂ corresponding to the amount of back-up power, say 20%, which is not used by steering motor 10. To execute this operation, electronic signal S₂₂ is sent by power management unit to inverter 22, on the basis of a computation performed by unit 30.

The priority rule permits to downsize back-up power network 46 by reducing the global power absorbed by motors 10 and 20 under such conditions, while still maintaining enough effectiveness of the steering system , at least for operation according to a so-called limp-mode.

Steering motors 10 and 20 may be AC or DC motors. Steering motors 10 and 20 in the example are AC motors which may be synchronous or asynchronous.

Setting a priority rule limits for example the risk or the extent of the front axle steering assistance system 14 lacking power in case of failure of the high voltage network and thus, preserves drivability of the vehicle. The priority rule also permits, by downsizing the back-up power network 46, to lower the size, the weight and the cost of this network. As back-up power network 46 is connected to low voltage battery set 48 which feeds several other powered systems of the vehicle, such as radio, lights or heating, the limitation of the power absorbed by motors 10 and 20 from the back-up network 46 may protect at least to a certain extent those other systems from a lack of electrical power.

The invention is applicable with trucks, buses, cars and any other automotive land vehicle having steering wheels.

## Claims

1. Method for controlling the power supply of an electrically powered steering system on-board an automotive land vehicle (T) equipped with a high voltage source (44) and a low voltage source (48), wherein a first steering motor (10) operates at a nominal operating voltage which is higher than the voltage of the low voltage source, is fed by the high voltage source and may absorb a first nominal operating power, and wherein a step-up circuit (50) is connected to said low voltage source (48), and is adapted to deliver a back-up electrical power in case of failure of said high voltage source (44),
**characterized in that** the steering system comprises a second steering motor (20) which operates at a nominal operating voltage which is higher than the voltage of the low voltage source, which is fed by the high voltage source and may absorb a second nominal operating power, and **in that**, in case of failure of the high voltage source (44), back-up electrical power absorbed by each of the two motors (10, 20) is limited on the basis of a priority rule.

2. Method according to claim 1, **characterized in that**, in case of failure of the high voltage source (44), the first steering motor (10) is controlled to absorb no more than a first percentage of its nominal operating power, the second steering motor (20) is controlled to absorb no more than a second percentage of its nominal operating power, and **in that** first percentage is higher than second percentage.

3. Method according to claim 1 or 2, **characterized in that**, in case of failure of the high voltage source (44), the motors are controlled so that a first fraction of the back-up power is absorbed by the first steering motor (10), so that a second fraction of the back-up power is absorbed by a second motor (20), and so that the first fraction is larger than the second fraction.

4. Method according to claim any preceding claim, **characterized in that** the priority rules varies according to at least one vehicle parameter.

5. Method according to claim 1 to 4, **characterized in that** the rotation speed (ω₁₀, ω₂₀) of each of the motors (10, 20) is controlled, in case of failure of the high voltage source (44), so as to be able to generate a torque capacity (C₁₀, C₂₀) with a value equal to the torque value which it is capable of delivering in a normal configuration of said high voltage source.

6. Method according to any preceding claim, **characterized in that** the high voltage source is connected to a high voltage power network of the vehicle to which is connected a traction motor capable of delivering driving torque to a driveline of the vehicle.

7. Method according to any preceding claim, **characterized in that** the low voltage source is connected to a low voltage power network of the vehicle to which are connected low power consumers of the vehicle.

8. Power supply system for an electrically powered steering system on-board an automotive land vehicle, equipped with a high voltage source (44) and a low voltage source (48), wherein a first steering motor (10) operates at a nominal operating voltage which is higher than the voltage of the low voltage source, is fed by the high voltage source and may absorb a first nominal operating power, and wherein a step-up circuit (50) is connected to said low voltage source (48) and is adapted to deliver a back-up electrical power in case of failure of said high voltage source (44),
**characterized in that** the steering system comprises a second steering motor (20) which operates at a nominal operating voltage which is higher than the voltage of the low voltage source, which is fed by the high voltage source and may absorb a second nominal operating power, and **in that** the power supply system comprises means (12, 22, 30, 32) to control the rotation speed (ω₁₀, ω₂₀) of each of the motors (10, 20) so as to, in case of failure of the high voltage source (44), limit the back-up electrical power absorbed by each motor (10, 20) on the basis of a priority rule included in a dataset (D).

9. Power supply system according to claim 8, **characterized in that** the means to control the rotation speed (ω₁₀, ω₂₀) of each motor (10, 20) comprise two inverters (12, 22), each connected to one motor (10, 20), and a power management unit (30) connected to the two inverters (12, 22).

10. Power supply system according to claim 8 or 9, **characterized in that** a first motor (10) delivers torque to a front axle steering assistance system (14) of the vehicle and **in that** a second motor (20) delivers torque to a rear axle steering assistance system (24) of the vehicle.

11. Power supply system according to claim 9, **characterized in that** the control means include a memory (32) where the dataset (D) is stored and **in that** the control means (30) have access to said memory (32).

12. Power supply system according to one of claims 8 to 11, **characterized in that** the dataset (D) is fixed.

13. Power supply system according to one of claims 8 to 11, **characterized in that** the dataset (D) is adjustable.

## Patentansprüche

1. Verfahren zur Steuerung der Stromversorgung eines elektrisch betriebenen Lenksystems an Bord eines Landkraftfahrzeugs (T), das mit einer Hochspannungsquelle (44) und einer Niederspannungsquelle (48) ausgestattet ist, wobei ein erster Lenkmotor (10) bei einer Nennbetriebsspannung arbeitet, die höher ist als die Spannung der Niederspannungsquelle, durch die Hochspannungsquelle gespeist wird und eine erste Nennbetriebsleistung absorbieren kann, und wobei ein Erhöhungsschaltkreis (50) mit der Niederspannungsquelle (48) verbunden ist und dazu ausgelegt ist, eine elektrische Reserveleistung im Fall eines Fehlers der Hochspannungsquelle (44) zu liefern,
**dadurch gekennzeichnet, dass** das Lenksystem einen zweiten Lenkmotor (20) umfasst, der bei einer Nennbetriebsspannung arbeitet, die höher ist als die Spannung der Niederspannungsquelle, der von der Hochspannungsquelle gespeist wird und eine zweite Nennbetriebsleistung absorbieren kann, und dass im Falle eines Fehlers der Hochspannungsquelle (44) eine elektrische Reserveleistung, die durch jeden der zwei Motoren (10, 20) absorbiert wird, auf der Basis einer Prioritätsregelung begrenzt wird.

2. Verfahren nach Anspruch 1, **dadurch gekennzeichnet, dass** im Falle eines Fehlers der Hochspannungsquelle (44) der erste Lenkmotor (10) so gesteuert wird, dass er nicht mehr als einen ersten Prozentsatz seiner Nennbetriebsleistung absorbiert, der zweite Lenkmotor (20) so gesteuert wird, dass er nicht mehr als einen zweiten Prozentsatz seiner Nennbetriebsleistung absorbiert, und dass der erste Prozentsatz höher ist als der zweite Prozentsatz.

3. Verfahren nach Anspruch 1 oder 2, **dadurch gekennzeichnet, dass** im Falle eines Fehlers der Hochspannungsquelle (44) die Motoren so gesteuert werden, dass ein erster Teil der Reserveleistung durch den ersten Lenkmotor (10) absorbiert wird, so dass ein zweiter Teil der Reserveleistung durch einen zweiten Motor (20) absorbiert wird, und so, dass der erste Teil größer ist als der zweite Teil.

4. Verfahren nach irgendeinem vorhergehenden Anspruch, **dadurch gekennzeichnet, dass** die Prioritätsregelungen wenigstens einem Fahrzeugparameter entsprechend variieren.

5. Verfahren nach Anspruch 1 bis 4, **dadurch gekennzeichnet, dass** die Drehzahl (ω₁₀, ω₂₀) jedes der Motoren (10, 20) im Falle eines Fehlers der Hochspannungsquelle (44) so gesteuert wird, dass eine Drehzahlkapazität (C₁₀, C₂₀) mit einem Wert erzeugt werden kann, der gleich dem Drehmomentwert ist, der in einer normalen Konfiguration der Hochspannungsquelle geliefert werden kann.

6. Verfahren nach irgendeinem vorhergehenden Anspruch, **dadurch gekennzeichnet, dass** die Hochspannungsquelle mit einem Hochspannungsleistungsnetzwerk des Fahrzeugs verbunden ist, mit dem ein Traktionsmotor verbunden ist, der ein Antriebsmoment an einen Antriebsstrang des Fahrzeugs liefern kann.

7. Verfahren nach irgendeinem vorhergehenden Anspruch, **dadurch gekennzeichnet, dass** die Niederspannungsquelle mit einem Niederspannungsleistungsnetzwerk des Fahrzeugs verbunden ist, mit dem Verbraucher des Fahrzeugs mit geringem Stromverbrauch verbunden sind.

8. Stromversorgungssystem für ein elektrisch betriebenes Lenksystems an Bord eines Landkraftfahrzeugs, das mit einer Hochspannungsquelle (44) und einer Niederspannungsquelle (48) ausgestattet ist, wobei ein erster Lenkmotor (10) bei einer Nennbetriebsspannung arbeitet, die höher ist als die Spannung der Niederspannungsquelle, durch die Hochspannungsquelle gespeist wird und eine erste Nennbetriebsleistung absorbieren kann, und wobei ein Erhöhungsschaltkreis (50) mit der Niederspannungsquelle (48) verbunden ist und dazu ausgelegt ist, eine elektrische Reserveleistung im Fall eines Fehlers der Hochspannungsquelle (44) zu liefern,
**dadurch gekennzeichnet, dass** das Lenksystem einen zweiten Lenkmotor (20) umfasst, der bei einer Nennbetriebsspannung arbeitet, die höher ist als die Spannung der Niederspannungsquelle, der von der Hochspannungsquelle gespeist wird und eine zweite Nennbetriebsleistung absorbieren kann, und dass das Stromversorgungssystem Einrichtungen (12, 22, 30, 32) zur Steuerung der Drehzahl (ω₁₀, ω₂₀) jedes der Motoren (10, 20) umfasst, um im Falle eines Fehlers der Hochspannungsquelle (44) die elektrische Reserveleistung, die durch jeden Motor (10, 20) absorbiert wurde, auf der Basis einer Prioritätsregelung zu begrenzen, die in einem Datensatz (D) enthalten ist.

9. Stromversorgungssystem nach Anspruch 8, **dadurch gekennzeichnet, dass** die Einrichtung zur Steuerung der Drehzahl (ω₁₀, ω₂₀) jedes Motors (10, 20) zwei Inverter (12, 22), die jeweils mit einem Motor (10, 20) verbunden sind, und eine Leistungsmanagementeinheit (30) umfasst, die mit den zwei Invertern (12, 22) verbunden ist.

10. Stromversorgungssystem nach Anspruch 8 oder 9, **dadurch gekennzeichnet, dass** ein erster Motor (10) ein Drehmoment an ein Vorderachsenlenkassistenzsystem (14) des Fahrzeugs liefert und dass ein zweiter Motor (20) ein Drehmoment an ein Hinterachsenlenkassistenzsystem (24) des Fahrzeugs liefert.

11. Stromversorgungssystem nach Anspruch 9, **dadurch gekennzeichnet, dass** die Steuereinrichtung einen Speicher (32) aufweist, in dem der Datensatz (D) gespeichert ist, und dass die Steuereinrichtung (30) Zugriff auf den Speicher (32) hat.

12. Stromversorgungssystem nach einem der Ansprüche 8 bis 11, **dadurch gekennzeichnet, dass** der Datensatz (D) fest ist.

13. Stromversorgungssystem nach einem der Ansprüche 8 bis 11, **dadurch gekennzeichnet, dass** der Datensatz (D) einstellbar ist.

## Revendications

1. Procédé de commande d'une alimentation électrique d'un système de direction alimenté électriquement embarqué dans un véhicule terrestre automobile (T) comprenant une source haute tension (44) et une source basse tension (48), dans lequel un premier moteur de direction (10) fonctionne à une tension de fonctionnement nominale qui est supérieure à la tension de la source basse tension, est alimenté par la source haute tension, et peut absorber une première puissance de fonctionnement nominale, et dans lequel un circuit amplificateur (50) est connecté à ladite source basse tension (48) et va fournir une puissance électrique de secours en cas de panne de ladite source haute tension (44),
**caractérisé en ce que** le système de direction comprend un second moteur de direction (20) qui fonctionne à une tension de fonctionnement nominale qui est supérieure à la tension de la source basse tension, qui est alimenté par la source haute tension et qui peut absorber une seconde puissance de fonctionnement nominale et **en ce que**, dans le cas d'une panne de la source haute tension (44), la puissance électrique de secours absorbée par chacun des deux moteurs (10, 20) est limitée en fonction d'une règle de priorité.

2. Procédé selon la revendication 1, **caractérisé en ce que**, dans le cas d'une panne de la source haute tension (44), le premier moteur de direction (10) est commandé de manière à ne pas absorber plus qu'un premier pourcentage de sa puissance de fonctionnement nominale, le second moteur de direction (20) est commandé de manière à ne pas absorber plus qu'un second pourcentage de sa puissance de fonctionnement nominale, et **en ce que** le premier pourcentage est supérieur au second pourcentage.

3. Procédé selon les revendications 1 ou 2, **caractérisé en ce que**, dans le cas d'une panne de la source haute tension (44), les moteurs sont commandés de sorte qu'une première fraction de la puissance de secours soit absorbée par le premier moteur de direction (10), qu'une seconde fraction de la puissance de secours soit absorbée par un second moteur (20) et que la première fraction soit supérieure à la seconde fraction.

4. Procédé selon l'une quelconque des revendications précédentes, **caractérisé en ce que** les règles de priorité varient en fonction d'au moins un paramètre du véhicule.

5. Procédé selon les revendications 1 à 4, **caractérisé en ce que** la vitesse de rotation (ω₁₀, ω₂₀) de chacun des moteurs (10, 20) est commandée, en cas de panne de la source haute tension (44), de manière à pouvoir générer une capacité de couple (C₁₀, C₂₀) ayant une valeur égale à la valeur de couple qu'elle est capable de fournir dans une configuration normale de ladite source haute tension.

6. Procédé selon l'une quelconque des revendications précédentes, **caractérisé en ce que** la source haute tension est connectée à un réseau électrique haute tension du véhicule auquel est connecté un moteur de traction capable de fournir un couple d'entraînement vers le train d'entraînement du véhicule.

7. Procédé selon l'une quelconque des revendications précédentes, **caractérisé en ce que** la source basse tension est connectée à un réseau électrique basse tension du véhicule auquel sont connectés des consommateurs de basse puissance du véhicule.

8. Système d'alimentation électrique d'un système de direction alimenté électriquement embarqué dans un véhicule terrestre automobile, comprenant une source haute tension (44) et une source basse tension (48), dans lequel un premier moteur de direction (10) fonctionne à une tension de fonctionnement nominale qui est supérieure à la tension de la source basse tension, est alimenté par la source haute tension, et peut absorber une première puissance de fonctionnement nominale, et dans lequel un circuit amplificateur (50) est connecté à ladite source basse tension (48) et va fournir une puissance électrique de secours en cas de panne de ladite source haute tension (44),
**caractérisé en ce que** le système de direction comprend un second moteur de direction (20) qui fonctionne à une tension de fonctionnement nominale qui est supérieure à la tension de la source basse tension, qui est alimenté par la source haute tension et qui peut absorber une seconde puissance de fonctionnement nominale et **en ce que**, le système d'alimentation électrique comprend des moyens (12, 22, 30, 32) pour commander la vitesse de rotation (ω₁₀, ω₂₀) de chacun des moteurs (10, 20) de manière, en cas de panne de la source haute tension (44), à limiter la puissance électrique de secours absorbée par chacun des moteurs (10, 20) en fonction d'une règle de priorité comprise dans un ensemble de données (D).

9. Système d'alimentation électrique selon la revendication 8, **caractérisé en ce que** les moyens pour commander la vitesse de rotation (ω₁₀, ω₂₀) de chacun des moteurs (10, 20) comprennent deux onduleurs (12, 22), chacun connecté à un moteur (10, 20), et une unité de gestion électrique (30) connectée aux deux onduleurs (12, 22).

10. Système d'alimentation électrique selon les revendications 8 ou 9, **caractérisé en ce qu'**un premier moteur (10) fournit un couple vers un système de direction assistée d'essieu avant (14) du véhicule et **en ce qu'**un second moteur (20) fournit un couple vers un système de direction assistée d'essieu arrière (24) du véhicule.

11. Système d'alimentation électrique selon la revendication 9, **caractérisé en ce que** les moyens de commande comprennent une mémoire (32) où l'ensemble de données (D) est stocké, et **en ce que** les moyens de commande (30) ont accès à ladite mémoire (32).

12. Système d'alimentation électrique selon l'une des revendications 8 à 11, **caractérisé en ce que** l'ensemble de données (D) est fixe.

13. Système d'alimentation électrique selon l'une des revendications 8 à 11, **caractérisé en ce que** l'ensemble de données (D) est ajustable.
